# EUROPEAN PATENT APPLICATION

(11) **EP 1 791 046 A1**
(43) Date of publication of application: **30.05.2007**
(21) Application number: 05025952.2
(22) Date of filing: 29.11.2005
(51) Int. Cl.: G05B 19/042, G06N 3/00, A63H 13/00, H04M 1/02

(54) **Animatronic and portable device**

(71) Applicant: Chang, HoYu, 338 Taoyuan County (TW)
(72) Inventor: Chang, HoYu, 338 Taoyuan County (TW)
(74) Representative: Winkler, Andreas Fritz Ernst

(57) **Abstract**

The invention provides an animatronic and portable device comprising an animatronic enclosure and a circuit board. The animatronic enclosure includes a plurality of animatronic parts equipped with limb units that are driven by actuator unit and transmission unit. The circuit board comprises a main control unit, a memory unit and actuator units. Programs and data are stored in the memory unit and employed by the main control unit for controlling the rotation angles, speed, acceleration, direction of the limb units and showing animatronic motion, displaying image, playing music.

## Description

### FIELD OF THE INVENTION

The invention relates to an animatronic and portable device, and more particularly to a portable device that can automatically produce motions when it is receiving external signal or controlled by the user, triggered by internal signal or settings.

### BACKGROUND OF THE INVENTION

A conventional portable device is usually motionless controlled by a user, such as a mobile phone that can play music but without any interesting motion when it receives an incoming call signal.

Taking a conventional music player as another example, the music player is motionless when playing pop music. It is uninteresting because it cannot present the singer's facial expression, body language or hottest dance steps.

### SUMMARY OF THE INVENTION

The object of the present invention is to provide an animatronic and portable device that can automatically produce motions when it is receiving external signal or controlled by the user, triggered by internal signal or settings.

The animatronic and portable device of the present invention can be applied to any portable devices, including wireless communication device (mobile phone), portable audio/video device, portable radio device, cassette player, MP3 player, MP4 player, data storage device, Flash drive, electronic dictionary, PDA, camera, video recorder, Pager, GPS device and any other applicable electronic devices.

There are 3 designs in the invention. The first one: A control circuit of the present invention can be embedded in the original functional circuit board of the portable device mentioned above with some appropriate modification of the enclosure to make the portable device animatronic. The second design: The control circuit can be designed to be independent from the original functional circuit and placed in the portable device to catch the internal signal from the functional circuit with some appropriate modification of the enclosure to make the portable device animatronic. The third design: An animatronic enclosure outside the portable device can be independently designed. The control circuit of the invention is placed inside the enclosure, and it can communicate with the portable device via external interfaces or wireless interfaces to achieve the same object.

### BRIEF DESCRIPTION OF THE DRAWINGS

Fig. 1 is the system block diagram of the first embodiment according to the present invention;
Fig. 2 (a), (b) and (c) shows respectively 3D diagram, cross-sectional view and motion diagram of the first embodiment according to the present invention;
Fig. 3 is the system block diagram of the second embodiment according to the present invention;
Fig. 4 (a) and (b) are the front view and motion diagram of the third embodiment according to the present invention.

### DETAILED DESCRIPTION OF THE PREFERRED EMBODIMEMNTS

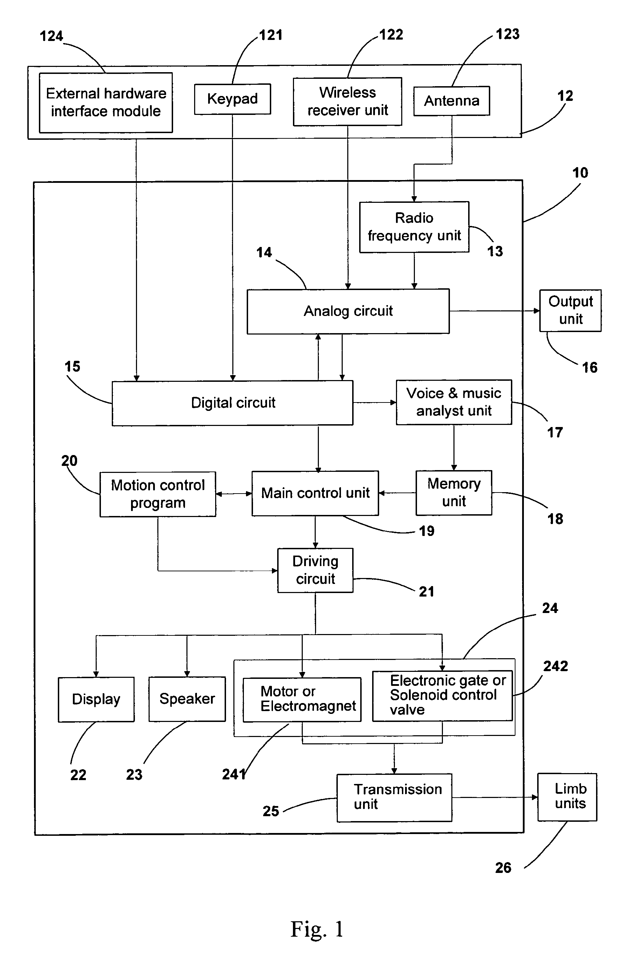

Referring to Fig. 1, which shows the system block diagram of the first embodiment of the present invention. A mobile phone has a control circuit 10 inside the functional circuit board thereof, which originally comprises a radio frequency unit 13, an analog circuit 14, a digital circuit 15, a memory unit 18, a main control unit 19, a display 22 and a speaker 23. The control circuit 10 receives signals or commands from an input unit 12, and passes the signals or commands through the radio frequency unit 13, the analog circuit 14, the digital circuit 15 and comes to the main control unit 19 for processing, then drives the display 22, speaker 23 via a driving circuit 21.

The input unit 12 comprises a keypad 121, a wireless receiver unit 122, an antenna 123 and an external hardware interface module 124. The wireless receiver unit 122 can be WLAN, WiFi, WiMax, GSM, GPRS, CDAM, UWB, induction coil, laser sensor, Bluetooth or infrared sensor. The external hardware interface module 124 can be RS232, USB, IEEE1384/1394, LPT, IIC, SPI, MIDI or Ethernet. The output unit 16 is a speaker or an earphone.

The present invention adds a voice & music analyst unit 17, a driving circuit 21, a motion control program 20, an actuator unit 24 and a transmission unit 25 in the control circuit 10. The actuator unit 24 comprises motors or electromagnet 241, electronic gate or solenoid control valve 242. The main control unit 19 employs the motion control program 20 to drive the driving circuit 21 to control the actuator unit 24 for moving the limb units 26 via the transmission unit 25 and, meanwhile, drives the display 22, speaker 23.

The transmission unit 25 can be gear, cam, link, spring, or gas spring.

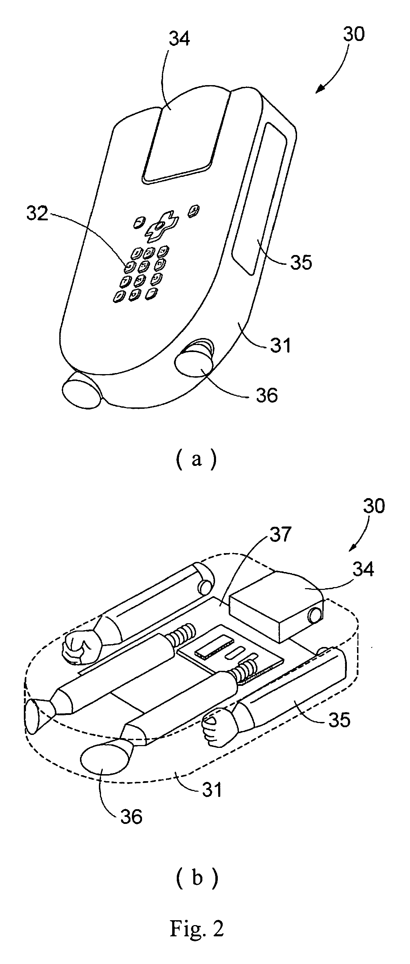

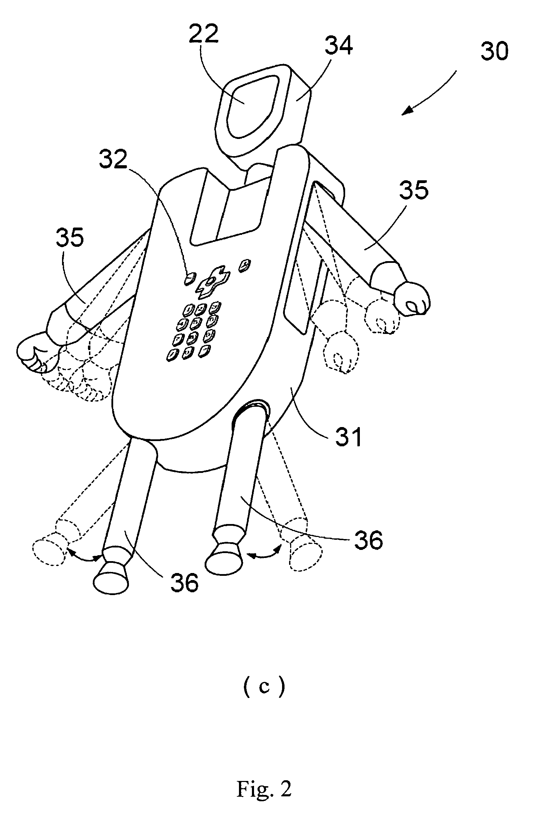

Referring to Fig. 2 (a), (b) and (c), which show the 3D diagram, the cross-sectional view and the motion diagram of the first embodiment. A mobile phone 30 comprises a control circuit 10 (Fig. 1), an animatronic enclosure 31 and a keypad 32.∘ The enclosure 31 comprises a plurality of animatronic parts equipped with limb units, such as head 34, hands 35, legs 36, and is driven by the actuator unit 24 and the transmission unit 25. The voice & music analyst unit 17 analyzes the content, emotion, tone or volume of voice from an incoming call and save the analysis results into the memory unit 18. The main control unit 19 updates the information from the digital circuit 15 or the memory unit 18 to the motion control program 20 for driving the actuator unit 24 and the transmission unit 25 by the driving circuit 21, so as to move the head 34, hands 35, legs 36 and shows image, animation, movie, television or facial expression of a singer in the display 22 on the head 34. The main control unit 19 can receive data or trigger signals from the keypad 121, the external hardware interface module 124; or receive wireless communication signals, wireless communication data, trigger signals from antenna 123 and radio frequency unit 13; or receive remote control signals, trigger signals from wireless receiver unit 122; or receive commands from motion control program 20 to control actuator unit 24 for driving appropriate transmission unit 25 to stretch out or retract the head 34, hands 35 and legs 36. Depending on the tone, emotion, content of the voice or music, the motion can be variant and interesting.

The above-mentioned wireless communication data comprises data call, Wireless Village, IMPS, SMS, EMS, MMS, POC, FAX, EMail, WAP, Java, TCPIP, PPP or any communication data that the functional circuit 37 can receive and process.

The above-mentioned trigger signals comprises voice call, data call, infrared induction, laser induction, RF induction, audio induction, electromagnetic induction, system alarm, power switch on-off, data signals from external hardware interface module or any induction signals that the functional circuit 37 can receive and be triggered.

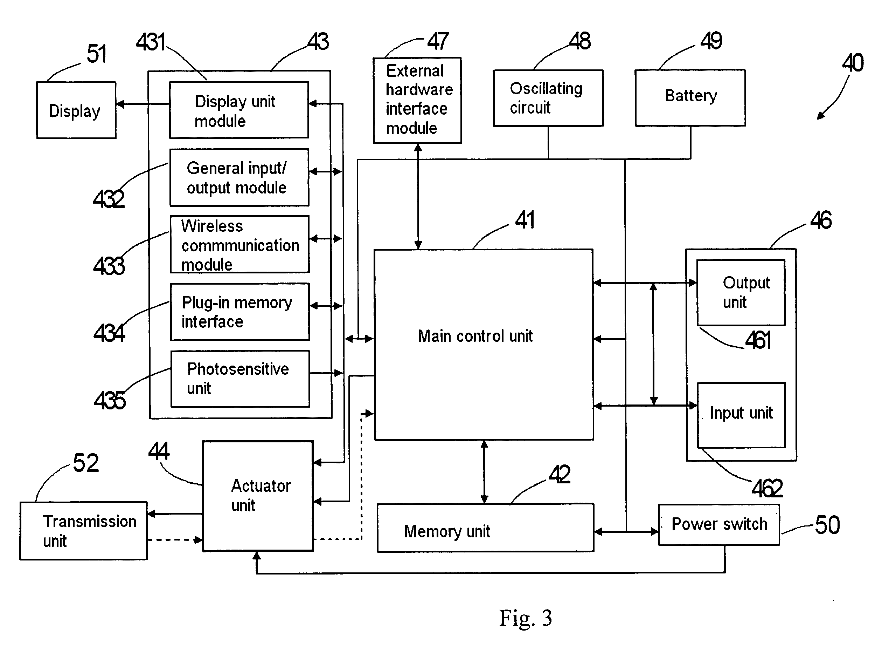

Referring to Fig. 3, which shows the system block diagram of the second embodiment of the present invention. A standalone control circuit 40 is set up inside a portable device. It can catch data or signals from the original functional circuit board embedded in the portable device and function itself independently. The enclosure of the portable device needs to be designed as animatronic.

The control circuit 40 in Fig. 3 comprises:

A main control unit 41 which can execute a motion control program to receive and analyze data to send motion command or image, video, audio information to each relative unit. The motion control program can analyze voice or music and get the denotation, emotion, tone scale or volume of voice and music to decide which motion the portable device should present.

An input/output unit 46 comprises output unit 461 and input unit 462. The main control unit 41 processes and sends audio signal to output unit 461 for playing music by speaker, earphone (for example, plays a music when the portable device dances). The input unit 462 can catch control commands, remote control signals, audio signals, internal signals or internal settings via sensors or each module in the functional circuit board of the portable device, and then send the information to the main control unit 41 for processing.

A memory unit 42 comprises ROM and RAM to store a motion control program and speed, rotation angle, acceleration, direction of all limb units and image, video, audio data for the main control unit 41 to read and process.

An input/output interface 43 comprises:

A display unit module 431 connects with a display 51 such as LCD or LED to display facial expression for relative motion.

A general input/output module 432 connects to keypad or any other manipulation interfaces for a user to control the stretch, retraction or any motion of the limb units by manipulation.

A wireless communication module 433 enables a user to control the limb units to stretch, retraction or any motion via induction coil, Infrared, Bluetooth, UWB, GSM, GPRS, CDMA, WLAN, WiMax, WiFi or any other remote control method.

A plug-in memory interface 434 can be plugged with any storage device, such as Flash, SD, CF, MMC, MS, XD, SM, PCMCIA Memory, IDE storage, EEPROM, HD or CD to save all motion data, speed, rotation angle, acceleration, direction or video/audio data for the main control unit 41 to read and process.

An actuator unit 44 receives all motion parameters from the main control unit 41 to control speed, rotation angle, acceleration or direction of the transmission unit 52 to move the relative limb units.

The actuator unit 44 comprises motors, electromagnets, electronic gates or solenoid control valves.

The transmission unit 52 can be gear, cam, link, spring or gas spring.

Besides, the input/output interface 43 can also comprise a photosensitive unit 435 (such as photo-resistor or infrared sensor) to enable the main control unit 41 to detect its environment to avoid any barrier, response to the barrier or to dynamic trace, monitor, or shoot a moving object.

The control circuit 40 further comprises an external hardware interface module 47, an oscillating circuit 48, a battery 49, and a power switch 50. The external hardware interface module 47 comprises appropriate adapter, such as RS232, USB, IEEE1384/1394, LPT, IIC, SPI, MIDI or Ethernet, and can delivery commands, image, audio, motion, data or updated program to the memory unit 42 or the main control unit 41 for processing, storing or updating.

A power switch 50 can connect to the actuator unit 44 directly, when the portable device is powered on, the power switch 50 can control the actuator unit 44 directly to stretch all limb units for a start up motion and retract back while powering off.

The third embodiment of the invention is to keep the enclosure of the original portable device unchanged, but set up the control circuit 40 inside an additional animatronic enclosure. The additional animatronic enclosure is designed outside the original portable device. When the control circuit 40 receives signals, audio data, trigger signals or command from the functional circuit board of the portable device or from users' manipulation, the additional animatronic enclosure will stretch its limb units for motions.

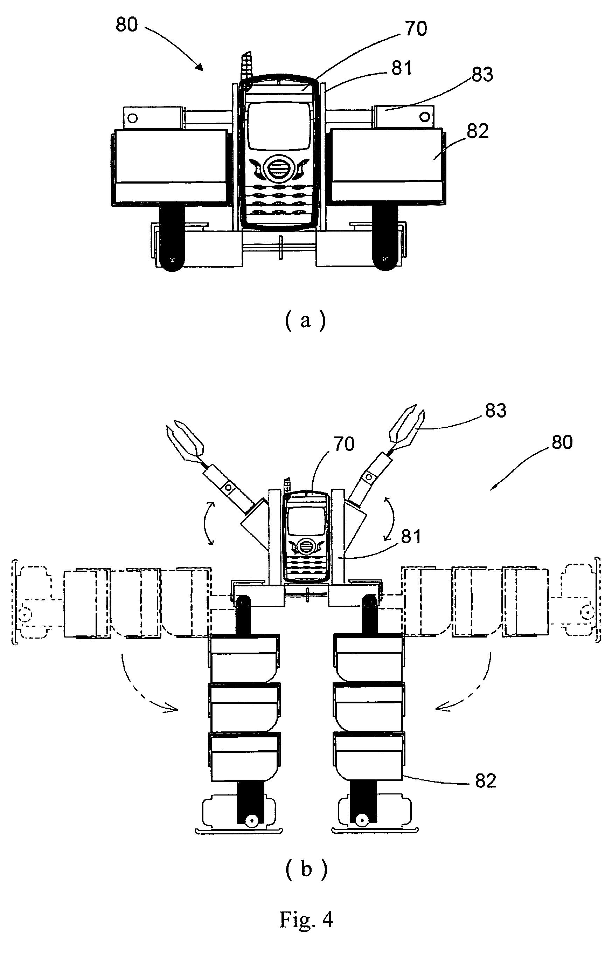

The third embodiment of the invention is shown in Fig. 4 (a) and (b), which shows a front view and a motion diagram of a mobile phone cradle 80. The mobile phone cradle 80 can be turned into a robot type. The mobile phone cradle 80 comprises a cabin 81 for carrying the mobile phone 70, and animatronic parts such as legs 82, hands 83. When the mobile phone cradle 80 receives control commands, remote control signals, external audio signals, internal signals, settings, wireless communication data, trigger signals or command from portable device or from users' manipulation, its legs 82 and hands 83 will be driven by the actuator unit and transmission unit and then stretch out and dance, as shown in Fig. 4, hands 83 lift up, legs 82 stretch out oppositely and then swing downward to stand up.

The scope of the present invention depends only upon the following Claims, and are not limited by the above embodiments.

## Claims

1. An animatronic and portable device, comprising a functional circuit board, an animatronic enclosure, an actuator unit and a transmission unit; the animatronic enclosure comprising a plurality of animatronic parts equipped with limb units which is driven by the actuator unit and the transmission unit; the functional circuit board comprising a main control unit, a memory unit and a motion control program; the main control unit can receive wireless communication signals, wireless communication data, trigger signals, remote control signals, commands, data and internal settings from the portable device and employ the motion control program to control the actuator unit and the transmission unit for moving the limb units.

2. The animatronic and portable device according to claim 1, wherein the actuator unit can transfer an electric energy into a mechanical energy for producing movement and is selected from the group consisting of motor, electromagnet, electronic gate and solenoid control valve; the transmission unit is driven by the actuator unit to move the limb units, and is selected from the group consisting of gear, cam, link, spring, and gas spring.

3. The animatronic and portable device according to claim 1, wherein the portable device is selected from the group consisting of wireless communication device, mobile phone, portable audio device, portable video device, portable radio device, cassette player, MP3 player, MP4 player, data storage device, Flash drive, electronic dictionary, PDA, camera, video recorder, Pager, GPS device and any other applicable electronic devices.

4. The animatronic and portable device according to claim 1, further comprising a voice & music analyst unit which can analyze the content, emotion, tone, volume of voice or music to provide the denotation, volume, tone scale information for the motion control program to decide which motion the limb units should present.

5. The animatronic and portable device according to claim 1, further comprising an input unit which includes keypad, wireless receiver unit, antenna or external hardware interface module; the antenna is to receive wireless communication signal or data, the wireless receiver unit is to receive remote control signal or trigger signal and is selected from the group consisting of WLAN, WiFi, WiMax, GSM, GPRS, CDAM, UWB, induction coil, laser sensor, Bluetooth and infrared sensor; the external hardware interface module is selected from the group consisting of RS232, USB, IEEE1384/1394, LPT, IIC, SPI, MIDI and Ethernet.

6. The animatronic and portable device according to claim 5, wherein the wireless communication data is selected from the group consisting of Data CALL, Wireless Village, IMPS, SMS, EMS, MMS, POC, FAX, EMAIL, WAP, Java, TCPIP, PPP and any other wireless communication data the portable device can receive.

7. The animatronic and portable device according to claim 5, wherein the trigger signals is selected from the group consisting of voice call, data call, infrared induction, laser induction, RF induction, audio induction, electromagnetic induction, system alarm, power switch on-off and data signals from external hardware interface module.

8. An animatronic and portable device, comprising a functional circuit board, an animatronic enclosure and a stand alone control circuit; the animatronic enclosure comprising a plurality of animatronic parts equipped with limb units; the stand alone control circuit is connected directly with the functional circuit board and can catch signals or commands from the functional circuit board to control the limb units for moving; the stand alone control circuit comprising:
a main control unit which can execute a motion control program to receive data and analyze data to send motion command or image, video, audio information to each relative unit;
a memory unit to store the motion control program and speed, rotation angle, acceleration, direction of the limb units and image, video, audio data for the main control unit to read and process;
an actuator unit which is connected with a transmission unit for receiving motion parameters from the main control unit to control speed, rotation angle, acceleration or direction of the transmission unit to move the limb units.

9. The animatronic and portable device according to claim 8, wherein the motion control program can analyze the content, emotion, tone, volume of voice or music to provide the denotation, volume, tone scale information for the motion control program to decide which motion the limb units should present.

10. The animatronic and portable device according to claim 8, further comprising one or more of the following modules:
an input/output interface module comprising one or more of the following modules:
a display unit module, which connects with a display to display facial expression for relative body motion;
a general input/output module, which connects with a keypad or any other manipulation interfaces for a user to control the stretch, retraction or any motion of the limb units by manipulation;
a wireless communication module, which enables the user to control the limb units to stretch, retraction or any motion via induction coil, Infrared, Bluetooth, UWB, GSM, GPRS, CDMA, WLAN, WiMax or WiFi;
a plug-in memory interface module, which can be plugged with any storage device, such as Flash, SD, CF, MMC, MS, XD, SM, PCMCIA Memory, IDE storage, EEPROM, HD or CD to save all motion data, speed, rotation angle, acceleration, direction or video, audio data for the main control unit to read and process;
a photosensitive unit module, which enables the main control unit to detect the environment to avoid any barrier, response to the barrier or to dynamic trace, monitor, or shoot a moving object;
an input/output unit module comprising an output unit and an input unit; the main control unit processes and sends audio signal to the output unit for playing music; the input unit catches control commands, remote control signals, audio signals, internal signals or internal settings by sensors or each module in the functional circuit board of the portable device, and then send the information to the main control unit for processing;
an external hardware interface module comprising RS232, USB, IEEE1384/1394, LPT, IIC, SPI, MIDI or Ethernet for delivering commands, image, audio, motion, data or updated program to the memory unit or the main control unit for processing, storing or updating;
a power switch module which is connected to the actuator unit directly, when the portable device is powered on or off, the power switch can control the actuator unit directly to stretch limb units for a start up motion or retract limb units back.

11. The animatronic and portable device according to claim 8, wherein the enclosure of the portable device is not animatronic, while an additional animatronic enclosure is designed to be outside of the portable device; the additional animatronic enclosure comprising a plurality of animatronic parts equipped with limb units; the stand alone control circuit is equipped within the additional animatronic enclosure and can catch signals from the functional circuit board of the portable device via wire connection or wireless communication or induction coil to control the limb units for moving.
